# EUROPÄISCHE PATENTSCHRIFT

(11) **EP 1 262 081 B1**
(45) Veröffentlichungstag und Bekanntmachung des Hinweises auf die Patenterteilung: **22.09.2004**
(21) Anmeldenummer: 01911739.9
(22) Anmeldetag: 06.03.2001
(51) Int. Cl.: H04Q 7/38

(54) **VERFAHREN ZUR STEUERUNG EINER INTERSYSTEM-VERBINDUNGSWEITERSCHALTUNG**
METHOD FOR CONTROLLING AN INTERSYSTEM LINK TRANSFER
PROCEDE POUR COMMANDER UN TRANSFERT ENTRE SYSTEMES

(30) Priorität: 06.03.2000 EP 00301815
(43) Veröffentlichungstag der Anmeldung: 04.12.2002
(73) Patentinhaber: SIEMENS AKTIENGESELLSCHAFT, 80333 München (DE)
(72) Erfinder: FÄRBER, Michael, 82515 Wolfratshausen (DE); THOMAS, David Wynne, Romsey, Hampshire SO51 7DB (GB); ISAACS, Kenneth, Bournemouth, Dorset BH7 7HF (GB); TRAYNARD, Jean-Michel, 81667 München (DE)
(86) Internationale Anmeldenummer: PCT/EP2001/002508
(87) Internationale Veröffentlichungsnummer: WO 2001/067795

(56) Entgegenhaltungen:
- WO-A-98/59513
- US-A- 5 878 349

## Beschreibung

Die Erfindung bezieht sich auf ein Verfahren zur Steuerung einer Intersystem-Verbindungsweiterschaltung, insbesondere einer Verbindungsweiterschaltung zwischen einem GSM- und einem UMTS-Mobilfunksystem.

Als Stand der Technik für das UMTS-Mobilfunksystem werden die UMTS-Standardisierungsdokumente [1] bis [3] referenziert. Für Beschreibungen des Mobilfunksystems der zweiten Generation GSM wird als allgemeiner Stand der Technik das Buch von J. Biala "Mobilfunk und Intelligente Netze", Vieweg Verlag, 1995, zugrunde gelegt.

Dokument D1=WO 98 59513 offenbart ein Verfahren zur Steuerung einer Intersystem-Verbindungsweiterschaltung zwischen zwei Funk-Kommunikationssystemen.

In Funk-Kommunikationssystemen, beispielsweise dem europäischen Mobilfunksystem der zweiten Generation GSM (Global System for Mobile Communications), werden Informationen wie beispielsweise Sprache, Bildinformation oder andere Daten mit Hilfe von elektromagnetischen Wellen über eine Funkschnittstelle übertragen. Auf der Funkschnittstelle werden eine oder mehrere Verbindungen zwischen einer Basisstation und einer Vielzahl von Teilnehmerstationen aufgebaut, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunication System) oder andere Systeme der 3. Generation sind Frequenzen im Frequenzband von ca. 2000 MHz vorgesehen. Für die dritte Mobilfunkgeneration UMTS sind zwei Modi vorgesehen, wobei ein Modus einen FDD-Betrieb (Frequency Division Duplex) und der an-dere Modus einen TDD-Betrieb (Time Division Duplex) bezeichnet. Diese Modi finden ihre Anwendung in unterschiedlichen Frequenzbändern, wobei beide Modi ein sogenanntes CDMA-Teilnehmerseparierungsverfahren (Code Division Multiple Access) unterstützen.

Aufgrund einer parallelen Existenz und einer gewünschten Harmonisierung zwischen den Funk-Kommunikationssystemen der zweiten und dritten Generation soll Teilnehmerstationen, die in einem Funk-Kommunikationssystem eine Verbindung aufgebaut haben, die Möglichkeit einer Weiterschaltung der Verbindung zu einem weiteren Funk-Kommunikationssystem, das unter Umständen einen anderen Übertragungsmodus unterstützt, gegeben werden. Eine derartige Intersystem-Verbindungsweiterschaltung, auch als Intersystem-Handover bezeichnet, setzt neben einer Synchronisierung der Teilnehmerstation auf das Funk-Kommunikationssystem, das die Verbindung übernehmen soll, die Kenntnis eines verwendeten Transportformats voraus. Dabei wird gemäß dem referenzierten Stand der Technik von den Basisstationen des UMTS-Mobilfunksystems einer Teilnehmerstation bei einem Verbindungsaufbau ein sogenannter Satz von Transportformat-Kombinationen TFCS (Transport Format Combination Set) signalisiert. Nachfolgend wird bei einer Änderung des aktuell verwendeten Transportformats ein sogenannter Transportformat-Kombinations-Identifizierer TFCI (Transport Format Combination Identifier) zu der Teilnehmerstation signalisiert, der angibt, welches Transportformat aus dem Satz möglicher Transportformat-Kombinationen genutzt wird.

Die Signalisierung des Satzes von Transportformat-Kombinationen TFCS würde abhängig von der Anzahl möglicher TFCIs in einem bekannten GSM-Signalisierungskanal eine Länge von bis zu 200 Oktets haben. Diese Länge ist aufgrund einer nur eingeschränkt zur Verfügung stehenden Kapazität der nutzbaren GSM-Signalisierungskanäle sehr nachteilig.

Die Aufgabe der Erfindung besteht darin, ein Verfahren bzw. eine Kommunikationssystem-Station vorzuschlagen, die bei einer Signalisierung einer Intersystem-Weiterschaltung eine geringere Belastung des Signalisierungskanals zumindest eines der Systeme ermöglicht.

Diese Aufgabe wird durch ein Verfahren zur Signalisierung einer Intersystem-Weiterschaltung mit den Merkmalen des Patentanspruchs 1, eine Kommunikations-Teilnehmerstation mit den Merkmalen des Patentanspruchs 6 bzw. eine Kommunikations-Netzstation mit den Merkmalen des Patentanspruchs 7 gelöst.

Vorteilhafte Ausgestaltungen sind Gegenstand von abhängigen Patentansprüchen.

Erfindungsgemäß wird der Satz von Transportformat-Kombinationen reduziert und in reduzierter Form zur Übertragung auf einem Signalisierungskanal, beispielsweise eines GSM-Mobilfunksystems, zu einer Teilnehmerstation verwendet. Um mit Daten des reduzierten Datensatz arbeiten zu können, weisen für dieses Verfahren geeignete Teilnehmerstationen und entsprechende Netzstationen einen Speicherbereich mit korrespondierenden Daten auf.

Ein Ausführungsbeispiel der Erfindung wird anhand der Zeichnung näher erläutert. Dabei zeigt:

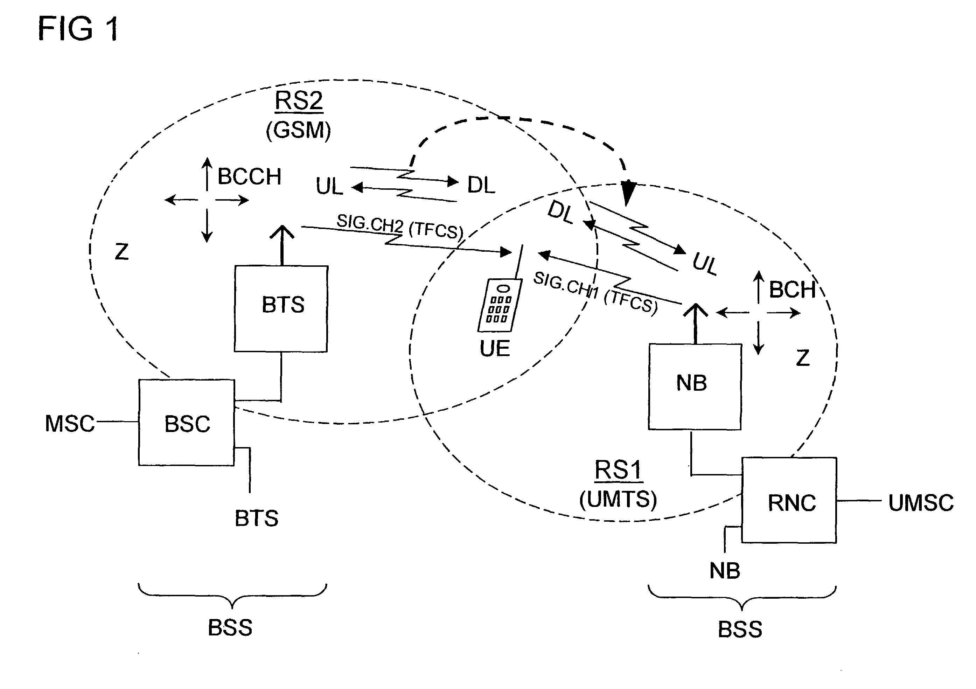

- FIG 1: ein Blockschaltbild zweier benachbarter Funk-Kommunikationssysteme, in deren sich überlappenden Funkzellen sich eine Teilnehmerstation befindet.

Erfindungsgemäß lassen sich bei einer Teilnehmerstation im Bereich zweier Funk-Systeme für eine Verbindungsweiterschaltung zwei beispielhafte Fälle unterscheiden. Dabei wird nachfolgend jeweils von einer Verbindungsweiterschaltung von einem GSM- zu einem UMTS-Mobilfunksystem ausgegangen, wobei prinzipiell auch die umgekehrte Richtung umsetzbar ist.

Gemäß einem ersten Fall wird während einer Verbindungsaufbauprozedur in einem GSM-Modus ein Dienst durch die Teilnehmerstation angefordert, der nicht von dem GSM-System bzw. von einem GSM-Übertragungskanal (sog. bearer) zur Verfügung gestellt werden kann. In diesem Fall besteht die Notwendigkeit einer dienstebegründeten Verbindungsweiterschaltung (Handover) von dem GSM- zu dem UMTS-Mobilfunksystem.

In dieser Phase wird nur ein erster Signalisierungskanal SDCCH (Stand-Alone Dedicated Control Channel) als selbständiger, fest zuweisbarer Steuerkanal aufgebaut. Die Übertragungskapazität des SDCCH erscheint jedoch unzureichend für die Übertragung der gesamten TFCS-Information, die beim vorliegenden Beispiel bis zu 200 Oktets umfassen kann. In dieser Phase ist aber noch kein Dienst aufgebaut. Das Problem wird daher erfindungsgemäß derart gelöst, dass die Verbindungsweiterschaltung auf einen Signalisierungskanal beschränkt wird. In einer einfachsten Ausprägung des Verfahrens wird beispielsweise nur ein Transportformat-Indikator TFCI für die Verbindungsweiterschaltung über den GSM-Signalisierungskanal GSM-SDCCH zum UMTS-System verwendet. Dabei muß eine a priori Kenntnis des zu verwendenden Transportformat-Indikators TFCI vorhanden sein.

Nach einer erfolgten Verbindungsweiterschaltung zu einem UMTS-Signalisierungskanal kann die Verhandlung über den zu nutzenden Dienst innnerhalb des UMTS-Systems abgeschlossen werden, wobei der Transportformat-Indikator TFCI aus dem dann vollständig verfügbaren Satz von Transportformat-Kombinationen TFCS für den Verkehrskanal innerhalb einer sogenannten UMTS-Funkträger-Konfigurierungsinformation (radio bearer configuration information) der Teilnehmerstation signalisiert wird.

Um eine größere Flexibilität zu ermöglichen, kann ein Satz von UMTS-Signalisierungskanälen definiert werden. Dieses ermöglicht dem Netzwerk, mittels einer reduzierten Signalisierung auf diese Signalisierungskanäle zuzugreifen. Bei einem beispielhaften Satz von 32 TFCI kann die reduzierte Signalisierung beispielsweise mittels einer einfachen Bitmap-Kodierung von 5 Bit innerhalb eines Signalisierungskanals SDCCH übertragen werden.

In einem zweiten beispielhaften Fall besteht bereits eine etablierte Verbindung zu dem GSM-Mobilfunksystem und es wird ein Aufbau eines weiteren Dienstes angefordert, der nur von dem UMTS-System zur Verfügung gestellt werden kann. Zum aktuellen Zeitpunkt der Standardisierung des UMTS-Systems, Release 99, wird lediglich von der Möglichkeit eines Aufbaus eines leitungsvermittelten Dienstes (CS - Circuit Switched) ausgegangen. Nichtsdestotrotz führt dieses zu einer vergrößerten Kombinationsmöglichkeit.

Wenn man wie beschrieben davon ausgeht, daß die detaillierte TFCI- bzw. TFCS-Verhandlung innerhalb des UMTS-Systems erfolgt, so ist zumindest eine Kombination eines Signalisierungskanals und eines CS-Dienstes zweckmäßig.

Der Vorteil des derzeitigen Standes gemäß Release 99 besteht darin, daß eine Verbindungsweiterschaltung von Übertragungskanälen mit mehreren Diensten und unterschiedlichen Dienstequalitäten auf einem GSM-Übertragungskanal unberücksichtigt bleiben kann, wobei das Konzept der Signalisierung mittels reduzierter Datensätze bzw. Anzahlen von Indikatoren in gleicher Weise auf derartige Prozeduren erweiterbar ist. Aus diesem Grund kann auf eine vollständige Flexibilität bei der TFCI-Kodierung innerhalb der Signalisierungsphase verzichtet werden.

Wenn man beispielsweise von 64 bis 128 Kombinationsmöglichkeiten zwischen einem benötigten CS-Übertragungskanal und einem Signalisierungskanal ausgeht, kann die TFCI-Kodierung auf dieses benötigte Volumen reduziert werden. Anstelle eines vollständigen Satzes möglicher TFCI wird die Auswahl auf eine vordefinierte Liste möglicher TFCI, die die jeweils möglichen Kombinationen repräsentieren, beschränkt. Eine Kodierung der Kombinationsmöglichkeiten kann wie in dem ersten betrachteten Fall mittels einer Bitmap-Kodierung von beispielsweise 7 Bit erfolgen.

Zusammenfassend umfasst das Konzept einen Ersatz der vollständigen TFCS-Signalisierung durch einen reduzierten Satz von Kombinationen, der sowohl in der Teilnehmerstation als auch im Netzwerk bekannt ist. Die reduzierte Signalisierung ermöglicht eine erste Verbindungsweiterschaltung zu einem UMTS-Signalisierungs- und Datenkanal oder zu einem UMTS-Signalisierungskanal, der nachfolgend für eine Weiterführung des Verbindungs- bzw. Diensteaufbaus unter Nutzung der dann vollständig zur Verfügung stehenden Flexibilität der TFCI-Kodierung genutzt wird.

Die FIG 1 zeigt in Umsetzung einer ersten Ausführungsform des Ausführungsbeispiels jeweils Ausschnitte aus zwei Mobilfunksystemen RS1, RS2 als Beispiel für Funk-Kommunikationssysteme, z.B. ein GSM- und ein UMTS-Mobilfunksystem. Ein Mobilfunksystem besteht jeweils aus einer Vielzahl von Mobilvermittlungsstellen MSC bzw. UMSC (Mobile Switching Center bzw. UMTS-Mobile Switching Center), die zu einem Vermittlungsnetz SSS (Switching Subsystem) gehören und untereinander vernetzt sind bzw. den Zugang zu einem Festnetz herstellen, und aus jeweils einem oder mehreren mit diesen Mobilvermittlungsstellen MSC, UMSC verbundenen Basisstationssystemen BSS (Base Station Subsystem). Ein Basisstationssystem BSS weist wiederum zumindest eine Einrichtung BSC (Base Station Controller) bzw. RNC (RNC - Radio Network Controller) zum Zuweisen von funktechnischen Ressourcen sowie zumindest eine jeweils damit verbundene Basisstation BTS (Base Transceiver Station) bzw. NB (Node B) auf.

Eine Basisstation BTS, NB kann über eine Funkschnittstelle Verbindungen zu Teilnehmerstationen UE (User Equipment), wie z.B. Mobilstationen oder anderweitigen mobilen und stationären Endgeräten, aufbauen. Durch jede Basisstation BTS, NB wird zumindest eine Funkzelle Z gebildet. Die Größe der Funkzelle wird in der Regel durch die Reichweite eines allgemeinen Signalisierungskanals BCH (Beacon Channel) bzw. BCCH (Broadcast Control Channel), der von den Basisstationen BTS, NB mit einer jeweils höheren Sendeleistung als der der Verkehrskanäle gesendet wird, bestimmt. Bei einer Sektorisierung oder bei hierarchischen Zellstrukturen können pro Basisstation BTS, NB auch mehrere Funkzellen versorgt werden. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluss.

Das Beispiel der FIG 1 zeigt eine Teilnehmerstation UE, die als eine Mobilstation ausgestaltet ist und die sich in einem Versorgungsbereich sowohl eines ersten Mobilfunksystems RS1, das einen UMTS-Standard unterstützt, als auch eines zweiten Mobilfunksystems RS2, das einen GSM-Standard unterstützt, befindet. Die Teilnehmerstation UE hat eine Verbindung zu der beispielhaft dargestellten Basisstation BTS des zweiten Mobilfunksystems RS2 aufgebaut.

Während der Verbindung wertet die Teilnehmerstation UE periodisch Übertragungsverhältnisse der Funkschnittstelle zu sie umgebenden Basisstationen, wie beispielsweise der angegebenen Basisstation NB des ersten Mobilfunksystems RS1 aus, um beispielsweise bei einer Verschlechterung der Übertragungsqualität zu der Basisstation BTS des zweiten Mobilfunksystems RS2 oder bei einem zusätzlichen Aufbau eines Dienstes eine Verbindungsweiterschaltung zu der Basisstation NB des ersten Mobilfunksystem RS1 anzuregen. Das gleiche Verfahren wird beispielsweise auch bei hierarchischen Netzstrukturen verwendet, wenn eine Verbindung zwischen unterschiedlichen Hierarchieebenen, beispielsweise von einer Mikrozelle in eine Makrozelle, die in einem jeweils unterschiedlichen Frequenzband arbeiten, weitergeschaltet wird.

Für die Durchführung einer Verbindungsweiterschaltung werden Signalisierungskanäle SIG.CH1 bzw. SIG.CH2 als selbständige, fest zuweisbare Steuerkanäle verwendet, wie dies vorstehend im Rahmen der Beschreibung der bevorzugten Signalisierungsprozeduren beschrieben ist. Zur Signalisierung einer Verbindungsweiterschaltung wird beim UMTS-System der Satz von Transportformat-Kombinationen TFCS (Transport Format Combination Set) verwendet. Dieser weist eine Vielzahl der Transportformat-Kombinations-Identifizierer TFCI (Transport Format Combination Identifier) auf, die zu der Teilnehmerstation signalisiert werden. Steht die Teilnehmerstation UE zu einem ersten Zeitpunkt mit dem GSM-Netz RS2 in Verbindung, so wird, wie vorstehend erläutert, zur Einleitung einer Weiterschaltung der reduzierte Satz von Transportformat-Kombinationen TFCS verwendet. Nach dem Aufbau einer entsprechenden Verbindung zu dem ersten Kommunikiationssystem wird der vollständige Satz von Transportformat-Kombinationen TFCS verwendet.

Gemäß einer modifizierten Ausführungsform kann insbesondere die Signalisierung des reduzierten Informationssatzes über verschiedene Signalisierungskanäle erfolgen, z.B. über den bereits für andere Kontroll- und Signalisierungszwecke bestehenden Nachrichtensteuerkanal BCCH. Das Broadcasten des reduzierten Satzes von Transportformat-Kombinationen TFCS kann somit insbesondere über den Rundfunk- bzw. Nachrichtenkanal BCCH erfolgen. Der Teilnehmerstation UE wird, z.B. über den Signalisierungskanal SIG.CH, gemeinsam mit dem Handover-Befehl ein dedizierter Transportformat-Kombinations-Identifizierer TFCI signalisiert und zugewiesen.

Diese Verbindungsweiterschaltung soll in zukünftigen Funk-Kommunikationssystemen, wie beispielweise dem UMTS-Mobilfunksystem, auch zwischen Funk-Kommunikationssystemen, die unterschiedliche Übertragungsverfahren unterstützen, durchführbar sein. Weitere Szenarien der Verbindungsweiterschaltung zwischen gleichen oder unterschiedlichen Systemen und Übertragungsverfahren sind denkbar.

### Referenzierte Dokumente:

[1] 3GPP: 3G TS 25.212 V3.1.1, 1999-12, Multiplexing and channel coding (FDD)
[2] 3GPP: 3G TS 25.222 V3.1.1, 1999-12, Multiplexing and channel coding (TDD)
[3] 3GPP: 3G TS 25.331 V3.1.0, 2000-01, RRC Protocol Specification

## Patentansprüche

1. Verfahren zur Steuerung einer Intersystem-Verbindungsweiterschaltung zwischen zwei Funk-Kommunikaticnssystemen (RS1, RS2), bei dem
- einer Teilnehmerstation (UE), die zu einem zweiten Funk-Kommunikationssystem (RS2) eine Verbindung aufbaut oder aufgebaut hat, in einem zweiten dedizierten Signalisierungskanal (SIG.CH2) oder Rundfunkkanal (BCCH) des zweiten Funk-Kommunikationssystems (RS2) ein reduzierter Satz von Transportformat-Kombinationen (TFCS) signalisiert wird,
- aus dem reduzierten Satz von Transportformat-Kombinationen (TFCS) ein Transportformat-Indikator (TFCI) ausgewählt wird, mittels dem eine Verbindungsweiterschaltung zu einem ersten Signalisierungskanal (SIG.CH1) und/oder Signalisierungs- und/oder Datenkanal des ersten Funk-Kommunikationssystems (RS1) initiiert wird, und
- in dem ersten Signalisierungskanal (SIG.CH1) ein vollständiger Satz von Transportformat-Kombinationen (TFCS) zu der Teilnehmerstation (UE) signalisiert wird.

2. Verfahren nach Anspruch 1, bei dem
die Verbindungsweiterschaltung zu einem Signalisierungs- und/oder Datenkanal des ersten Funk-Kommunikationssystems (RS1) initiiert wird.

3. Verfahren nach Anspruch 1 oder 2, bei dem
der Transportformat-Indikator (TFCI) mittels einer Bitmap-Kodierung kodiert wird.

4. Verfahren nach einem vorhergehenden Anspruch, bei dem
das erste Funk-Kommunikationssystem (RS1) als ein UMTS-Mobilfunksystem und das zweite Funk-Kommunikationssystem (RS2) als ein GSM-Mobilfunksystem ausgestaltet sind.

5. Verfahren nach einem vorstehenden Anspruch, bei dem
als zweiter Signalisierungskanal (SIG.CH2) des zweiten Funk-Kommunikationssystems (RS2) ein SDCCH (Stand-Alone Dedicated Control Channel) oder ein Rundfunksteuerkanal BCCH verwendet wird.

6. Kommunikationssystem-Teilnehmerstation (UE) zum Durchführen eines Verfahrens nach einem vorstehenden Anspruch, mit einem Speicherbereich, in dem Daten des reduzierten Satzes von Transportformat-Kombinationen (TFCS) abgespeichert sind.

7. Kommunikationssystem-Netzstation (BTS; NB; BSC; RNC) zum Durchführen eines Verfahrens nach einem vorstehenden Anspruch, mit einem Speicherbereich, in dem Daten des reduzierten Satzes von Transportformat-Kombinationen (TFCS) abgespeichert sind.

## Claims

1. Method for controlling an intersystem link transfer between two radio communication systems (RS1, RS2), in which
- a second dedicated signalling channel (SIG.CH2) or broadcast channel (BCCH) of the second radio communication system (RS2) is used to signal a reduced set of transport format combinations (TFCS) to a subscriber station (UE) which is establishing or has established a connection to a second radio communication system (RS2),
- from the reduced set of transport format combinations (TFCS) a transport format indicator (TFCI) is selected, and by this means a link transfer to a first signalling channel (SIG.CH1) and/or signalling and/or data channel of the first radio communication system (RS1) is initiated, and
- in the first signalling channel (SIG.CH1) a complete set of transport format combinations (TFCS) is signalled to the subscriber station (UE).

2. Method according to Claim 1, in which the link transfer to a signalling and/or data channel of the first radio communication system (RS1) is initiated.

3. Method according to Claim 1 or 2, in which the transport format indicator (TFCI) is encoded by means of bitmap coding.

4. Method according to a previous Claim, in which the first radio communication system (RS1) is designed as a UMTS mobile radio system and the second radio communication system (RS2) is designed as a GSM mobile radio system.

5. Method according to a previous Claim, in which a stand-alone dedicated control channel (SDCCH) or a broadcast control channel (BCCH) is used as the second signalling channel (SIG.CH2) of the second radio communication system (RS2).

6. Communication system subscriber station (UE) for carrying out a method according to a previous Claim, with a memory area in which data about the reduced transport format combination set (TFCS) is stored.

7. Communication system network station (BTS; NB; BSC; RNC) for carrying out a method according to a previous Claim, with a memory area in which data about the reduced transport format combination set (TFCS) is stored.

## Revendications

1. Procédé pour commander un transfert de liaison inter-systèmes entre deux systèmes de radiocommunication (RS1, RS2), dans lequel
- un jeu réduit de combinaisons de formats de transport (TFCS) est signalé à une station d'abonné (UE), qui établit ou a établi une liaison vers un deuxième système de radiocommunication (RS2), dans un deuxième canal de signalisation dédié (SIG.CH2) ou canal de radiodiffusion (BCCH) du deuxième système de radiocommunication (RS2),
- dans le jeu réduit de combinaisons de formats de transport (TFCS) est choisi un indicateur de format de transport (TFCI) au moyen duquel est initialisé un transfert de liaison vers un premier canal de signalisation (SIG.CH1) et/ou un canal de signalisation et/ou de données du premier système de radiocommunication (RS1) et
- un jeu complet de combinaisons de formats de transport (TFCS) est signalé à la station d'abonné (UE) dans le premier canal de signalisation (SIG.CH1).

2. Procédé selon la revendication 1, dans lequel
le transfert de liaison est initialisé vers un canal de signalisation et/ou de données du premier système de radiocommunication (RS1).

3. Procédé selon la revendication 1 ou 2, dans lequel
l'indicateur de format de transport (TFCI) est codé au moyen d'un codage bitmap.

4. Procédé selon une revendication précédente, dans lequel
le premier système de radiocommunication (RS1) est configuré comme un système radio mobile UMTS et le deuxième système de radiocommunication (RS2) est configuré comme un système radio mobile GSM.

5. Procédé selon une revendication précédente, dans lequel
un SDCCH (Stand-Alone Dedicated Control Channel) ou un canal de commande de radiodiffusion BCCH est utilisé en tant que deuxième canal de signalisation (SIG.CH2) du deuxième système de radiocommunication (RS2).

6. Station d'abonné (UE) d'un système de communication, servant à exécuter un procédé selon une revendication précédente, comprenant une zone de mémoire dans laquelle sont mises en mémoire des données du jeu réduit de combinaisons de formats de transport (TFCS).

7. Station de réseau (BTS; NB; BSC; RNC) d'un système de communication, servant à exécuter un procédé selon une revendication précédente, comprenant une zone de mémoire dans laquelle sont mises en mémoire des données du jeu réduit de combinaisons de formats de transport (TFCS).
